# EUROPEAN PATENT APPLICATION

(11) **EP 1 166 699 A2**
(43) Date of publication of application: **02.01.2002**
(21) Application number: 01500165.4
(22) Date of filing: 29.06.2001
(51) Int. Cl.: A47J 36/28

(54) **Containers for pre-cooked food incorporating means to heat the packed food product**

(30) Priority: 30.06.2000 ES 200001636
(71) Applicant: Munoz Mur, Cristina, 22300 Barbastro (Huesca) (ES)
(72) Inventor: Rodriguez Ferragut, Luis, 22300-Barbastro, Huesca (ES)
(74) Representative: Lanza Murciano, Marino Manuel

(57) **Abstract**

Improvements are described in the object of the Main Patent Number 9501942, for a "Container for pre-cooked
food, incorporating means to heat the packed food product", intended to simplify the manufacture and use of the combination, which foresees the inclusion of an aluminium nacelle (2) inside a cardboard nacelle (1), the can (7) containing the food product being located above said nacelle (2). The latter includes a percussor (3), with a pointed upper rim, over which there is a bag (4) of water, the rest of the volume being filled with solid calcium oxide (5). When the user presses, using both thumbs, the bottom (8a, 8b) of the cardboard nacelle (1), the percussor (3) breaks the bag (4) of water, the latter escapes and comes into contact with the calcium oxide which reacts generating the heat necessary to heat the can (7) and the product inside.

## Description

### Object of the Invention

This invention refers to improvements introduced in the object of the main patent number 9501942, for "containers for pre-cooked food incorporating means to heat the packed food product", being the object of the Main Patent Number 9501942, by means of which, essential novel characteristics and significant advantages are added with respect to means known and used for these purposes in the current state-of-the-art.

More specifically, the invention proposes the development of a container for pre-cooked food, incorporating means to heat the packed food product which, compared with that described in the aforementioned Main Patent, has been considerably improved with respect to manufacturing conditions and use. Said improvements basically consist of the container including, inside an aluminium nacelle, a percussor device, such that on pressing the container with the fingers, said percussor breaks a bag of water such that the water reacts with the deposited amount of calcium oxide, generating sufficient heat to heat the food can housed in the space above where said reagents are located.

The field of application of this invention is within the industry dedicated to the manufacture of containers for pre-cooked products for fast preparation. Likewise, it may be used by the industry manufacturing food products for outdoor activities, beach, military manoeuvres, etc.

### Background of the Invention

The Main Patent number 9501942/1, related to a "container for pre-cooked food incorporating means to heat the packed food product", as indicated therein, describes a type of container built in such a way that it allows the housing of a can containing the food product, such that heating of said product may be performed quickly and without the need of external heating devices, preventing the possibility of undesired accidents occurring due to the user having to handle a heating device to heat the pre-cooked food. This is made possible by the incorporation of the means necessary to raise the packed food product's temperature to a pre-determined level.

This invention has been developed to improve even more the conditions of use of this type of package and to simplify its manufacture, permitting that, like the patented device it improves, a package containing the pre-cooked food may be heated quickly and comfortably, without using fire.

For this purpose, the heating means of the packed food product in the package for pre-cooked food consists of a cardboard nacelle, which may be recycled and which supports high temperatures, counting with a blunt mouth having a perimetric flap rib.

The inside part of said nacelle incorporates, in the lower part and joined with glue to prevent its movement, an aluminium nacelle which has a percussor stuck to the centre of this base. Above the percussor, a bag of water has been foreseen and the rest of its volume is filled with solid calcium oxide.

The base of the food can is stuck to the cardboard nacelle that may be recycled, such that it is completely fastened and located in the upper part of the aluminium nacelle and over the products producing the heat generation reaction.

For a better presentation, it has been foreseen that the above mentioned assembly be packed in a cardboard box including the description of the pre-cooked food, as well as directions for use. Said packing has an area in the lower base, marked by perforated dotted line, where the user should place the thumbs of both hands and press the package so as to allow the mixing of the reagents, thereby achieving heat generation, resulting in the desired heating of the food.

According to the latter, once the time arrives to consume the food inside the metal container having simplified means of opening, it is sufficient to press the bottom of the cardboard nacelle, in the area having the dotted line, with both thumbs. This operation exerts pressure on the percussor to break the bag of water, such that on coming into contact with the calcium oxide, an endothermic reaction occurs, raising the temperature of the pre-cooked food product inside the can, leaving it ready to be consumed.

Once the heating has been achieved, the user may remove the package holding the assembly by the cardboard nacelle so as not to burn him/herself and proceeding to open the food can.

### Brief Description of the Drawings

These and other characteristics and advantages of the invention may be more clearly understood from the following detailed description of a preferred embodiment, given solely as an illustrative and non-limiting example with reference to the attached drawings:
Figure 1 shows a schematic side elevation view of a transverse section of the container for pre-cooked foods provided with heating means for the packed food product, and
Figure 2 shows a flat view of the same object shown in Figure 1, seen from the base having perforated areas foreseen for manual pressing.

### Description of a Preferred Embodiment

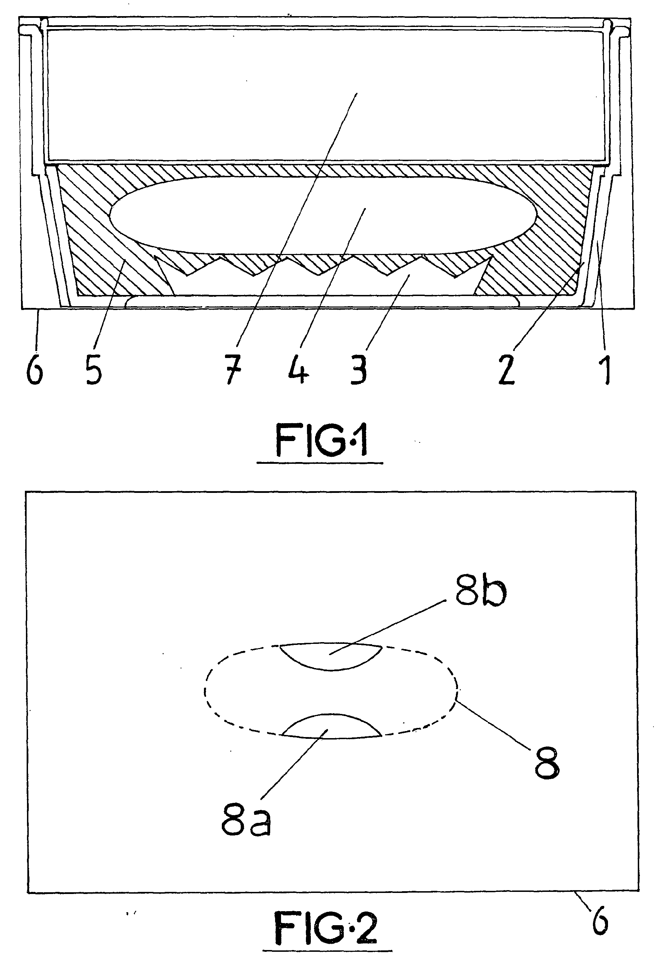

To carry out the following detailed description of the preferred embodiment of this invention, permanent reference is made to the drawings for which, the same numeric references for equal or similar parts have been used. Therefore, firstly referring to Figure 1, the container is shown for pre-cooked food having means to heat the packed food product, consisting of a cardboard nacelle (1), that may be recycled, capable of supporting high temperatures and having a blunt mouth with a perimetric flap rib and which internally houses in its lower half, a nacelle (2) of a material such as aluminium, both nacelles being stuck together with glue to prevent mutual relative movement. The last nacelle mentioned (2) has, in a preferable centred position with respect to its lower base, a percussor (3)fixed into position, preferably by means of glue. Above, the percussor (3) there is a bag (4) containing a predetermined amount of water, while the remaining volume has been filled with a reaction product (5), such as solid calcium oxide.

The can containing the food has been indicated by reference (7) and is kept in place by means of sticking a narrow perimetric portion of its base with glue to the aluminium nacelle (2) and by sticking its side faces to the cardboard nacelle (1), such that all the components of the assembly remain totally fastened, hence assuring that said can containing the food product occupying the upper part of the cardboard nacelle (1) and above the products (4 and 5) which are capable of reacting to generate the heat desired.

The assembly is packed in a cardboard box (6) incorporating, along its outside surface, the description of the characteristics of the pre-cooked food and directions of use. Said package (6) has a premarked area (8) on the base consisting of perforated dotted line, where the user may place his thumbs and press the container inwards, such that on applying sufficient pressure to the bottom of the cardboard nacelle (1) and then, across the latter and the aluminium nacelle (2), to the percussor (3), the latter, due to its shape acts over the bag (4) of water causing its rupture and allowing the water to leave the bag (4), such that on coming into contact with the product (5) (calcium oxide), the endothermic reaction occurs, generating heat to heat the can (7) raising the temperature and that of the pre-cooked food product contained inside thereof. In this simple and fast way, the preparation of the food product may be made for its immediate consumption.

In any event, as indicated previously, the exact position considered best to apply the force necessary to trigger the reaction, corresponds to the premarked area indicated by number (8) and especially the areas (8a, 8b) opposite and prepared for a comfortable positioning of the thumbs of both hands of the user.

It is not considered necessary to extend the contents of this description any more for an expert in the matter to understand its scope and the advantages derived from the invention, as well as how to develop it and put it into practice.

However, it should be understood that the invention has been described according to a preferred embodiment thereof, such that it may be susceptible to modifications without changing its essential nature, it being possible that said modifications may affect the shape, size and/or manufacturing materials.

## Claims

1. Improvements introduced in the object of the Main Patent number 9501942, for a "Container for pre-cooked food, incorporating means to heat the packed food product", whose container consists of a cardboard nacelle (1), that may be recycled, and capable of supporting high temperatures, in the lower part of which there is a nacelle (2) in a material such as aluminium, the can (7) being placed in such a way that contains the food in the upper part of the cardboard nacelle (1) and above the aluminium nacelle (2), **characterised in that** the mentioned aluminium nacelle (2) internally houses in a centred position with respect to its base, a percussor device (3), shaped to have an upper rim with several pointed ends, over which a bag (4) with water has been positioned, the rest of the space beneath the can (7) that contains the food having been filled with a product such as calcium oxide (5), in solid state, and in such a way that when the user transmits a pressure with both its thumbs to the bottom of the cardboard nacelle (1), said pressure is exerted on the percussor (3), which breaks the bag of water (4) by acting against it with the tips of its edges, bringing about the contact of the water with the calcium oxide (5) and producing the corresponding endothermic reaction to generate the heat necessary to raise the temperature of the pre-cooked food product contained inside the can (7).

2. Improvements according to claim 1, **characterised in that** the fastening of the can (7) containing the food product is made by sticking its base with glue to the upper rim of the aluminium nacelle (2) and along its sides to the cardboard nacelle (1), hence assuring its positioning over the mentioned reaction products (4, 5).

3. Improvements according to claim 1, **characterised in that** the combination of components forming the container are packed in an external cardboard box (6), on which the area (8) of the base over which manual pressure is to be applied, has been premarked and especially the areas (8a, 8b) for placing the thumbs of both hands of the user.
